(19) Europäisches Patentamt
European Patent Office
Office européen des brevets

(11) **EP 4 651 592 A1**

(12) **EUROPEAN PATENT APPLICATION**
published in accordance with Art. 153(4) EPC

(43) Date of publication:
**19.11.2025 Bulletin 2025/47**

(21) Application number: **23921470.3**

(22) Date of filing: **24.10.2023**

(51) International Patent Classification (IPC):
*H04W 72/04* (2023.01)      *H04W 72/232* (2023.01)
*H04W 72/21* (2023.01)      *H04L 5/00* (2006.01)

(52) Cooperative Patent Classification (CPC):
**H04L 5/00; H04W 72/04; H04W 72/21;
H04W 72/232**

(86) International application number:
**PCT/KR2023/016527**

(87) International publication number:
**WO 2024/167097 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.02.2023 KR 20230016719**

(71) Applicant: **Samsung Electronics Co., Ltd.
Suwon-si, Gyeonggi-do 16677 (KR)**

(72) Inventors:
• **LEE, Ikbeom
Suwon-si, Gyeonggi-do 16677 (KR)**
• **KIM, Hojun
Suwon-si, Gyeonggi-do 16677 (KR)**
• **YANG, Hayoung
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND DEVICE FOR RESOURCE ALLOCATION IN WIRELESS COMMUNICATION SYSTEM**

(57) The present disclosure relates to a method and a device for resource allocation in a wireless communication system. A method performed by a base station in a wireless communication system according to an embodiment of the present disclosure may comprise the steps of: transmitting, to a terminal, configuration information including information on at least one first resource area to which at least one of a first channel and a first signal is allocated; transmitting, to the terminal, at least one piece of downlink control information (DCI) for scheduling transmission of a second channel; and receiving the second channel from the terminal, wherein the second channel is scheduled while being overlapped with the at least one first resource area and a second resource area that is a resource remaining after excluding the first resource area.

FIG.10

**Description**

[Technical Field]

The disclosure relates to a method and a device for resource allocation in a wireless communication system.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

5G mobile communication technology has been developed with the aim of supporting services and satisfying performance requirements for enhanced mobile broadband (eMBB), ultra-reliable low-latency communications (URLLC), and massive machine-type communications (mMTC). Currently, discussions are underway to improve and enhance the initial 5G mobile communication technology in consideration of the services that 5G mobile communication technology was intended to support. In addition, discussions are also underway regarding technologies related to wireless interface architecture/protocols and system architecture/service areas to support new services through integration and convergence with other industries.

The development of these 5G mobile communication systems may serve as the foundation for the development of 6G mobile communication technology.

A base station allocates wireless resources to a terminal and performs communication with the terminal by using the allocated wireless resources. In order to increase channel capacity in a wireless communication system, there is a method of allocating more wireless resources. However, since wireless resources are limited, more efficient utilization of wireless resources is required.

[Disclosure of Invention]

[Technical Problem]

The disclosure provides a method and a device for resource allocation in a wireless communication system.

[Solution to Problem]

A method performed by a base station in a wireless communication system according to an embodiment of the disclosure may include transmitting, to a terminal, configuration information including information on at least one first resource region to which at least one of a first channel and a first signal is allocated, transmitting, to the terminal, at least one piece of downlink control information (DCI) for scheduling transmission of a second channel, and receiving the second channel from the terminal, wherein the second channel is scheduled to overlap with the at least one first resource region and a second resource region corresponding to resources other than the first resource region.

[Advantageous Effects of Invention]

According to the disclosure, wireless communication can be performed efficiently.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.

FIG. 3 illustrates an example of a control resource set (CORESET) used to transmit a downlink control channel in a wireless communication system according to an embodiment of the disclosure.

FIG. 4 illustrates a structure of a downlink control channel in a wireless communication system according to an embodiment of the disclosure.

FIG. 5 illustrates a non-overlapping resource allocation method according to an embodiment of the disclosure.

FIG. 6 illustrates an overlapping resource allocation method according to an embodiment of the disclosure.

FIG. 7 illustrates a method of allocating one transport block (TB) to one UE in an overlapping resource allocation method according to an embodiment of the disclosure.

FIG. 8 illustrates a method of allocating, in a single slot, multiple TBs to multiple UEs in an overlapping resource allocation method according to an embodiment of the disclosure.

FIG. 9 illustrates a method of allocating, in a single slot, multiple TBs to one UE in an overlapping resource allocation method according to an embodiment of the disclosure.

FIG. 10 is a flowchart illustrating a resource allocation method by a base station according to an embodiment of the disclosure.

FIG. 11 is a flowchart illustrating a resource allocation method by a UE according to an embodiment of the disclosure.

FIG. 12 is a block diagram illustrating an internal structure of a UE according to an embodiment of the disclosure.

FIG. 13 is a block diagram illustrating a structure of a base station according to an embodiment of the disclosure.

[Best Mode for Carrying out the Invention]

A method performed by a base station in a wireless communication system according to an embodiment of the disclosure may include transmitting, to a terminal, configuration information including information on at least one first resource region to which at least one of a first channel and a first signal is allocated, transmitting, to the terminal, at least one piece of downlink control information (DCI) for scheduling transmission of a second channel, and receiving the second channel from the terminal, wherein the second channel is scheduled while being overlapped with the at least one first resource region and a second resource region, which is a remaining resource excluding the first resource region.

A method performed by a terminal according to an embodiment of the disclosure may include receiving, from a base station, configuration information including information on at least one first resource region to which at least one of a first channel and a first signal is allocated, receiving, from the base station, at least one piece of downlink control information (DCI) for scheduling transmission of a second channel, and transmitting the second channel to the base station, wherein the second channel is scheduled while being overlapped with the at least one first resource region and a second resource region, which is a remaining resource excluding the first resource region.

A base station in a wireless communication system according to an embodiment of the disclosure may include a transceiver, and at least one processor, wherein the at least one processor is configured to transmit, to a terminal, configuration information including information on at least one first resource region to which at least one of a first channel and a first signal is allocated, transmit, to the terminal, at least one piece of downlink control information (DCI) for scheduling transmission of a second channel, and receive the second channel from the terminal, wherein the second channel is scheduled while being overlapped with the at least one first resource region and a second resource region, which is a remaining resource excluding the first resource region.

A base station in a wireless communication system according to an embodiment of the disclosure may include a transceiver, and at least one processor, wherein the at least one processor is configured to transmit, to a terminal, configuration information including information on at least one first resource region to which at least one of a first channel and a first signal is allocated, transmit, to the terminal, at least one piece of downlink control information (DCI) for scheduling transmission of a second channel, and receive the second channel from the terminal, wherein the second channel is scheduled while being overlapped with the at least one first resource region and a second resource region, which is a remaining resource excluding the first resource region.

A terminal in a wireless communication system according to an embodiment of the disclosure may include a transceiver, and at least one processor, wherein the at least one processor is configured to receive, from a base station, configuration information including information on at least one first resource region to which at least one of a first channel and a first signal is allocated, receive, from the base station, at least one piece of downlink control information (DCI) for scheduling transmission of a second channel, and transmit the second channel to the base station, wherein the second channel is scheduled while being overlapped with the at least one first resource region and a second resource region, which is a remaining resource excluding the first resource region.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, the base station and the terminal are not limited to the above examples. In the disclosure, a "downlink (DL)" refers to a radio link via which a base station transmits a signal to a terminal, and an "uplink (UL)" refers to a radio link via which a terminal transmits a signal to a base station.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

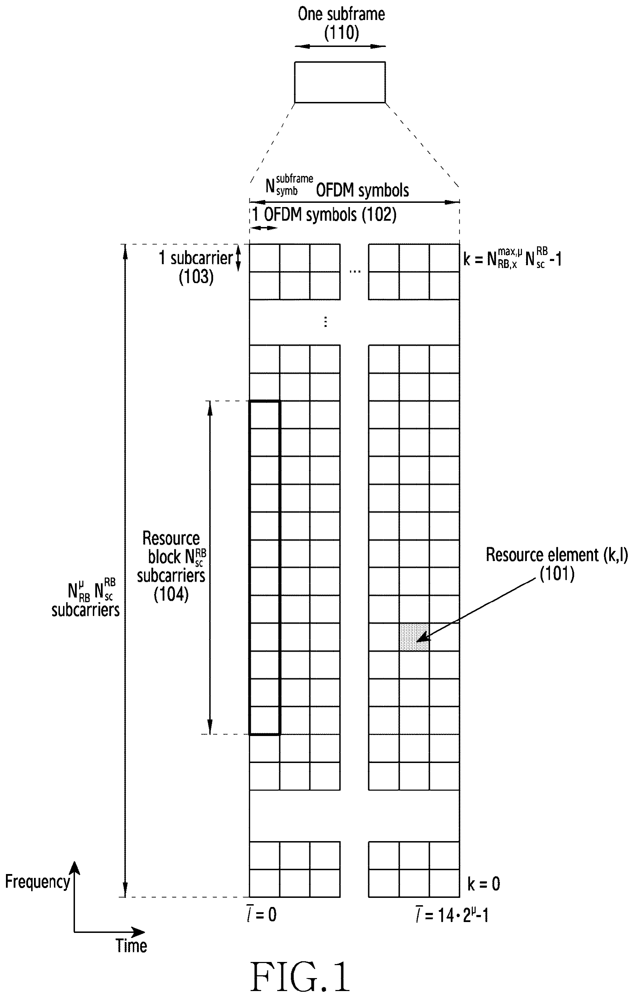

FIG. 1 illustrates a basic structure of a time-frequency domain in a wireless communication system according to an embodiment of the disclosure.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1ms.

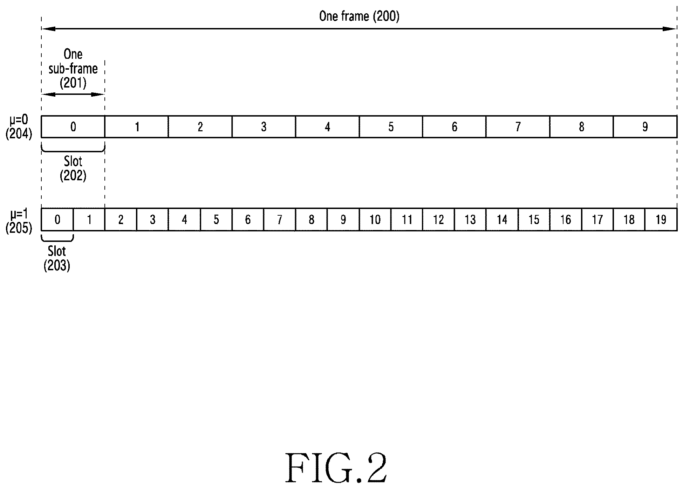

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values μ for the subcarrier spacing 204 or 205. The example in FIG. 2 illustrates a case in which the subcarrier spacing configuration value is μ=0 (204), and a case in which μ=1 (205). In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration μ as in Table 1 below.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Hereinafter, a downlink control channel in a 5G communication system will be described in more detail with reference to the accompanying drawings.

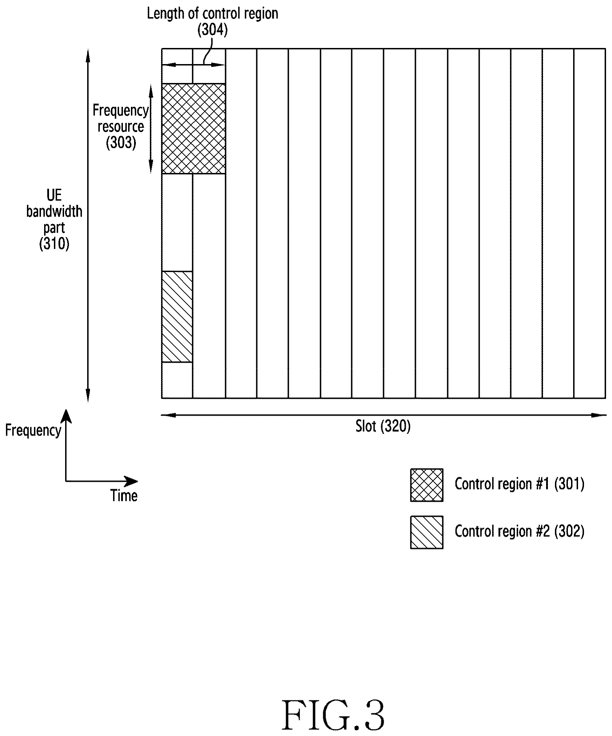

FIG. 3 illustrates an example of a control resource set (CORESET) used to transmit a downlink control channel in a wireless communication system according to an embodiment of the disclosure.

FIG. 3 illustrates an example in which a UE bandwidth part 310 is configured along the frequency axis, and two control resource sets (control resource set #1 301 and control resource set #2 302) are configured within one slot 320 along the time axis. The control resource sets 30land 302 may be configured in a specific frequency resource 303 within the entire UE bandwidth part 310 along the frequency axis. The control resource sets 301 and 302 may be each configured as one or multiple OFDM symbols along the time domain, and the number of the OFDM symbols may be defined as a control resource set duration 304. Referring to the example illustrated in FIG. 3, control resource set #1 301 is configured to have a control resource set duration corresponding to two symbols, and control resource set #2 302 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided.

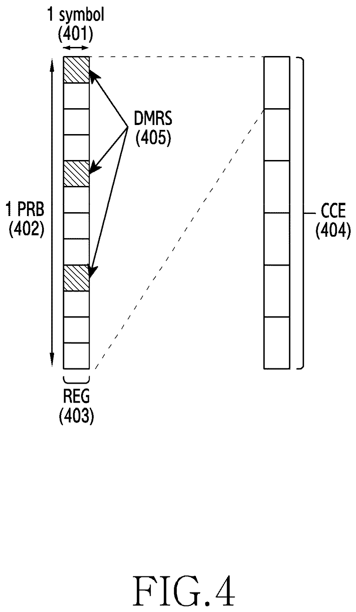

FIG. 4 illustrates a structure of a downlink control channel in a wireless communication system according to an embodiment of the disclosure.

Referring to FIG. 4, FIG. 4 illustrates an example of a basic unit of time and frequency resources constituting a downlink control channel. According to FIG. 4, the basic unit of time and frequency resources constituting a control channel may be referred to as a resource element group (REG) 403, and the REG 403 may be defined by one OFDM symbol 401 along the time axis and one physical resource block (PRB) 402, that is, 12 subcarriers, along the frequency axis. The base station may configure a downlink control channel allocation unit by concatenating the REGs 403.

Provided that the basic unit of downlink control channel allocation in 5G is a control channel element 404 as illustrated in FIG. 4, one CCE 404 may include multiple REGs 403. To describe the REG 403 illustrated in FIG. 4, for example, the REG 403 may include 12 REs, and if one CCE 404 includes six REGs 403, one CCE 404 may then include 72 REs. A downlink control resource set, once configured, may include multiple CCEs 404, and a specific downlink control channel may be mapped to one or multiple CCEs 404 and then transmitted according to the aggregation level (AL) in the control resource set. The CCEs 404 in the control resource set are distinguished by numbers, and the numbers of CCEs 404 may be allocated according to a logical mapping scheme.

The basic unit of the downlink control channel illustrated in FIG. 4, that is, the REG 403, may include both REs to which DCI is mapped, and an area to which a reference signal (DMRS %n) for decoding the same is mapped. As in FIG. 4, three DRMSs 403 may be transmitted inside one REG 405. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like.

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI(RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI(INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

The DCI formats enumerated above may follow the definitions given below.

[Table 2]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM s ymbol(s) where UE may assume no transmission is inte nded for the UE |
| 2_2 | Transmission of TPC commands for PUCCH and PUSC H |
| 2_3 | Transmission of a group of TPC commands for SRS tr ansmissions by one or more UEs |

In 5G, multiple search space sets may be configured by different parameters (for example, parameters in Table 2), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

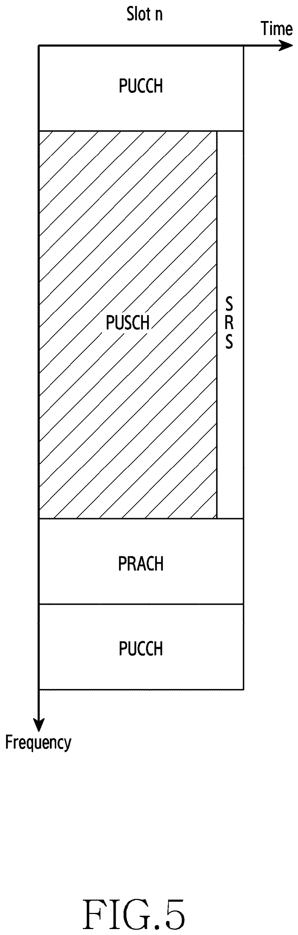

FIG. 5 illustrates a non-overlapping resource allocation method according to an embodiment of the disclosure.

Referring to FIG. 5, an uplink resource allocation structure according to an embodiment is illustrated. A base station may first allocate a control channel and/or a reference signal (RS) to a radio resource region, and then allocate a data channel (data channel or shared channel). In an embodiment, the control channel and/or the reference signal may include a physical uplink control channel (PUCCH), a sounding reference signal (SRS), a physical random access channel (PRACH), and the like. In addition, the data channel may include a physical uplink shared channel (PUSCH).

In an embodiment, the base station may, in the uplink, first allocate control channels and/or reference signals, such as PUCCH, SRS, and PRACH. In this case, the base station may allocate the PUCCH first, allocate the PRACH next, and then allocate the SRS. However, the method by which the base station allocates the control channel and/or reference signal is not limited thereto, and the base station may allocate the control channel and/or reference signal by using various methods.

Thereafter, the base station may allocate a data channel, such as a PUSCH, to a radio resource region to which a control channel and/or a reference signal, such as PUCCH, SRS, and PRACH is not allocated. That is, as illustrated in FIG. 5, the control channel and/or the reference signal and the data channel do not overlap and may be allocated to each of the radio resource regions. In the disclosure, such a resource allocation method is referred to as a non-overlapping resource allocation method. However, the method in which the control channel and/or the reference signal and the data channel are allocated to respective radio resource regions without overlapping is not limited thereto and may be referred to by various terms.

According to an embodiment, the non-overlapping resource allocation method ensures that the control channel and/or reference signal and the data channel are allocated to respective radio resource regions without overlapping, thereby enabling the base station and UE to clearly understand how specific resource regions are being used. Accordingly, in communication between the base station and the UE, there is an effect of simplifying signaling and reducing the possibility of errors. However, since the control channel and/or the reference signal and the data channel allocated to each resource region are clearly defined, the resource region cannot be utilized even when there is no channel and/or signal to be transmitted in a specific resource region, which may reduce flexibility. For example, even when a control channel and/or a reference signal such as PUCCH, PRACH, and SRS are not transmitted, the radio resource region allocated to the control channel and/or the reference signal such as PUCCH, PRACH, and SRS cannot be used to transmit the data channel such as a PUSCH, which make it difficult to use resources efficiently.

Furthermore, although the uplink has been described as an example in FIG. 5, the embodiments of the disclosure are not limited thereto, and the same method can be applied to the downlink as well. For example, a control channel and/or a reference signals such as a physical downlink control channel (PDCCH), a channel state information reference signal (CSI-RS), a demodulation reference signal (DMRS), and a phase tracking reference signal (PTRS), and a data channel such as a physical downlink shared channel (PDSCH) do not overlap and can be allocated to respective radio resource regions.

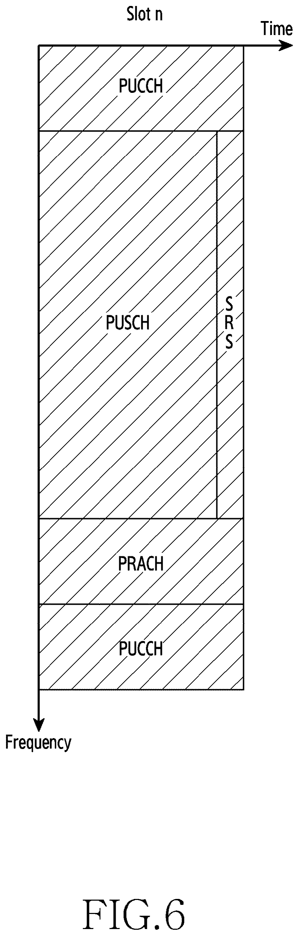

FIG. 6 illustrates an overlapping resource allocation method according to an embodiment of the disclosure.

Referring to FIG. 6, an uplink resource allocation structure according to an embodiment is illustrated. A base station may first allocate a control channel and/or a reference signal to a radio resource region, and then allocate a data channel. In an embodiment, the control channel and/or the reference signal may include a PUCCH, an SRS, a PRACH, and the like. In addition, the data channel may include a PUSCH.

In an embodiment, the base station may first allocate control channels and/or reference signals, such as PUCCH, SRS, and PRACH, in the uplink. Here, the base station may allocate the PUCCH first, allocate the PRACH next, and then allocate the SRS. However, the method by which the base station allocates the control channel and/or reference signal is not limited thereto, and the base station may allocate the control channel and/or reference signal by using various methods.

Thereafter, the base station may allocate a data channel, such as a PUSCH, to the entire radio resource region including the radio resource region to which the control channel and/or the reference signal, such as a PUCCH, an SRS, a PRACH, etc., is allocated. That is, as illustrated in FIG. 6, the resource region to which the control channel and/or the reference signal is allocated and the resource region to which the data channel is allocated may overlap. In the disclosure, such a resource allocation method is referred to as an overlapping resource allocation method. However, the method in which the resource region to which the control channel and/or the reference signal is allocated and the resource region to which the data channel is allocated overlap is not limited thereto and may be referred to by various terms.

According to an embodiment, in the overlapping resource allocation method, a control channel and/or a reference signal and a data channel are allocated in an overlapping manner to radio resource regions, allowing the base station and the UE to efficiently use radio resources for communication. For example, when the control channel and/or the reference signal such as PUCCH, PRACH, and SRS are not transmitted, the radio resource region allocated to the control channel and/or the reference signal such as PUCCH, PRACH, and SRS may not be used for transmission of the data channel such as a PUSCH, so that the resource can be flexibly and dynamically used. Accordingly, efficient use of resources is possible.

Furthermore, although the uplink is described as an example in FIG. 6, the disclosure is not limited thereto, and the same method can be applied to the downlink. For example, a resource region to which control channels and/or reference signals, such as a physical downlink control channel (PDCCH), a channel state information reference signal (CSI-RS), a demodulation reference signal (DMRS), and a phase tracking reference signal (PTRS), are allocated, and a resource region to which a data channel, such as a physical downlink shared channel (PDSCH), is allocated may overlap.

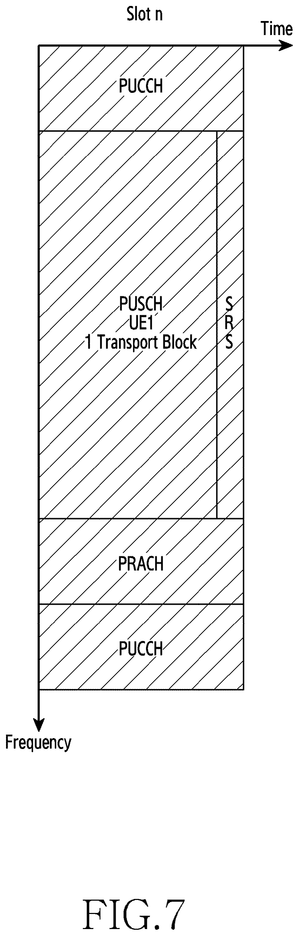

FIG. 7 illustrates a method of allocating one transport block (TB) to one UE in an overlapping resource allocation method according to an embodiment of the disclosure.

In explaining FIG. 7, duplicates of those described above will be briefly explained or omitted.

Referring to FIG. 7, an uplink resource allocation structure according to an embodiment is illustrated. A base station may first allocate a control channel and/or a reference signal to a radio resource region, and then allocate a data channel. That is, as illustrated in FIG. 7, a resource region to which a control channel and/or a reference signal is allocated and a resource region to which a data channel is allocated may overlap. In an embodiment, the control channel and/or the reference signal may include a PUCCH, an SRS, a PRACH, etc. In addition, the data channel may include a PUSCH.

In an embodiment, a base station may allocate, in a single slot, to one UE (UE1), all or a part of a resource region to which a control channel and/or a reference signal is allocated and a resource region to which a data channel is allocated. In this case, the base station may, in a single slot, allocate one transport block (TB) to all or a part of the resource regions. For example, as illustrated in FIG. 7, the base station may allocate, using one TB, the resource regions allocated to the PUCCH (upper), PUSCH, SRS, PRACH, and PUCCH (lower) to one UE. In other words, the size of the TB may correspond to the size of the entire resource region in a single slot in a bandwidth or bandwidth part. In addition, the base station may allocate, using one TB, a portion of the resource regions allocated to the PUCCH (upper), PUSCH, SRS, PRACH, and PUCCH (lower), for example, the resource regions allocated to the PUCCH (upper), PUSCH, PRACH, and PUCCH (lower), to one UE. However, the disclosure is not limited thereto, and the data channel may also be allocated to a resource region to which at least one control channel and/or reference signal is allocated.

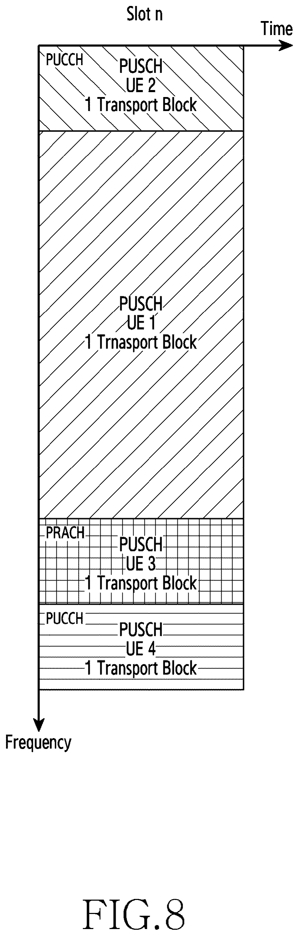

FIG. 8 illustrates a method of allocating, in a single slot, multiple TBs to multiple UEs in an overlapping resource allocation method according to an embodiment of the disclosure.

In explaining FIG. 8, duplicates of those described above will be briefly explained or omitted.

Referring to FIG. 8, an uplink resource allocation structure according to an embodiment is illustrated. A base station may first allocate a control channel and/or a reference signal to a radio resource region, and then allocate a data channel. That is, as illustrated in FIG. 8, a resource region to which a control channel and/or a reference signal is allocated and a resource region to which a data channel is allocated may overlap. In an embodiment, the control channel and/or the reference signal may include a PUCCH, an SRS, a PRACH, etc. In addition, the data channel may include a PUSCH.

In an embodiment, the base station may allocate, in a single slot, to multiple UEs, all or a part of a resource region to which a control channel and/or a reference signal is allocated and a resource region to which a data channel is allocated. In this case, the base station may allocate, in a single slot, one TB to each of UEs (Multi-UE 1 TB). Furthermore, a modulation and coding scheme (MCS) may be individually applied to each TB. More specifically, in a single slot, the data channels transmitted through the resource region to which a control channel and/or a reference signal is allocated and the resource region to which a data channel is allocated may each experience different channel conditions. Accordingly, an MCS suitable for the channel condition may be applied to each TB allocated to each resource region. According to an embodiment, communication may be performed more effectively by applying an MCS suitable for each channel condition in the transmission of the data channel.

For example, as illustrated in FIG. 8, the base station may allocate, in a single slot, the resource regions allocated to the PUCCH (upper), PUSCH, PRACH, and PUCCH (lower) to four UEs (UE1, UE2, UE3, and UE4), using one TB for each of the UEs. In this case, an MCS may be individually applied to each of the TBs allocated to the respective UEs (UE1, UE2, UE3, and UE4). That is, it is possible to apply different MCSs to the TBs allocated to the respective UEs (UE1, UE2, UE3, and UE4) in a single slot.

In addition, the base station may allocate, in a single slot, a portion of the resource regions allocated to the PUCCH (upper), PUSCH, PRACH, and PUCCH (lower), for example, the resource regions allocated to the PUCCH (upper), PUSCH, and PRACH to three UEs, using one TB for each of the UEs. However, the disclosure is not limited thereto, and a data channel may be allocated to at least one resource region to which a control channel and/or a reference signal is allocated. In this case, an MCS may be individually applied to each of the TBs allocated to the respective UEs.

Furthermore, the base station may allocate, in a single slot, the resource regions allocated to the PUCCH (upper), PUSCH, PRACH, and PUCCH (lower) to at least one UE. For example, the base station may allocate the resource regions allocated to the PUCCH (upper) and PUSCH to one UE, and allocate the resource regions allocated to PRACH and the PUCCH (lower) to two other UEs, respectively. In this case, the base station may allocate one TB to each of the UEs. Here, an MCS may be individually applied to the TBs allocated to the respective UEs.

In addition, in FIG. 8, a resource region allocated to the SRS is not illustrated in order to explain various embodiments. However, the disclosure is not limited thereto, and resources for the SRS may be allocated as shown in FIGS. 5, 6, and 7. Furthermore, the PUSCH may be allocated in an overlapping manner on the resource allocated to the SRS.

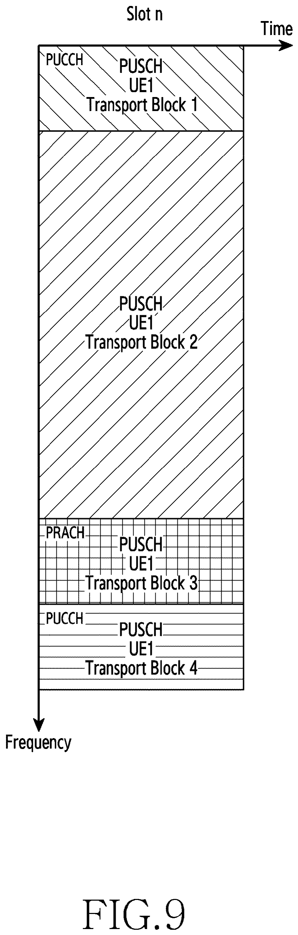

FIG. 9 illustrates a method of allocating, in a single slot, multiple TBs to one UE in an overlapping resource allocation method according to an embodiment of the disclosure.

In explaining FIG. 9, duplicates of those described above will be briefly explained or omitted.

Referring to FIG. 9, an uplink resource allocation structure according to an embodiment is illustrated. A base station may first allocate a control channel and/or a reference signal to a radio resource region, and then allocate a data channel. That is, as illustrated in FIG. 9, a resource region to which a control channel and/or a reference signal is allocated and a resource region to which a data channel is allocated may overlap. In an embodiment, the control channel and/or the reference signal may include a PUCCH, an SRS, a PRACH, etc. In addition, the data channel may include a PUSCH.

In an embodiment, the base station may allocate, in a single slot, to one UE, all or a part of the resource region to which the control channel and/or the reference signal is allocated and the resource region to which the data channel is allocated. In this case, the base station may allocate, in a single slot, one TB to each of the resource region to which the control channel and/or the reference signal is allocated and the resource region to which the data channel is allocated (1UE Multi-TB). Furthermore, an MCS may be individually applied to each TB. More specifically, in a single slot, the data channels transmitted through the resource region to which the control channel and/or the reference signal is allocated and the resource region to which the data channel is allocated may each experience different channel conditions. Therefore, an MCS suitable for the channel condition may be applied to each TB allocated to each of the resource regions. According to an embodiment, communication may be performed more effectively by applying an MCS suitable for each channel condition in the transmission of the data channel.

For example, as illustrated in FIG. 9, the base station may allocate, in a single slot, the resource regions allocated to the PUCCH (upper), PUSCH, PRACH, and PUCCH (lower) to one UE (UE1), using four different TBs. Here, MCS may be applied individually to the TBs allocated to the respective resource regions. That is, it is possible to apply different MCSs to each of the TBs allocated to the one UE (UE1) in a single slot.

In addition, the base station may allocate, in a single slot, a portion of the resource regions allocated to the PUCCH (upper), PUSCH, PRACH, and PUCCH (lower), for example, the resource regions allocated to the PUCCH (upper), PUSCH, and PRACH to one UE, using three different TBs. However, the disclosure is not limited thereto, and a data channel may be allocated to a resource region to which at least one control channel and/or reference signal is allocated. In this case, MCS may be applied individually to each of TBs.

In addition, in FIG. 9, a resource region allocated to the SRS is not illustrated in order to explain various embodiments. However, the disclosure is not limited thereto, and resources for the SRS may be allocated as shown in FIGS. 5, 6, and 7. Furthermore, the PUSCH may be allocated in an overlapping manner on the resource allocated to the SRS.

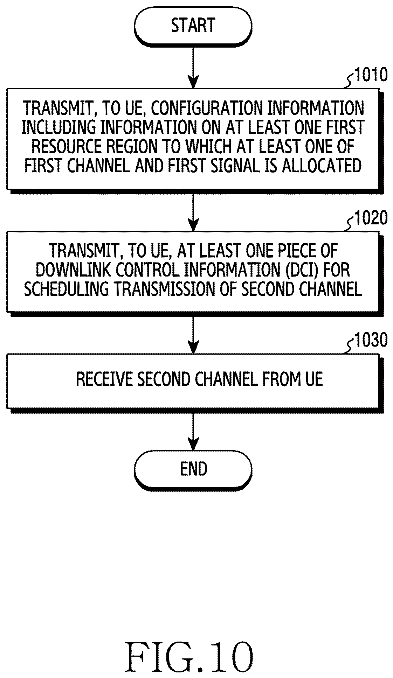

FIG. 10 is a flowchart illustrating a resource allocation method by a base station according to an embodiment of the disclosure.

In operation 1010, the base station transmits, to the UE, configuration information including information on at least one first resource region to which at least one of a first channel and a first signal is allocated. Here, the first channel and the first signal may include a control channel and/or a reference signal. For example, the control channel and/or the reference signal may include a PUCCH, an SRS, a PRACH, etc.

In an embodiment, the base station may allocate the control channel and/or the reference signal, such as PUCCH, SRS, and PRACH, through configuration information in the uplink. Here, the base station may allocate the PUCCH first, allocate the PRACH next, and then allocate the SRS. However, the method by which the base station allocates the control channel and/or reference signal is not limited thereto, and the base station may allocate the control channel and/or reference signal through various methods.

In an embodiment, the configuration information may be transmitted via higher layer signaling, where the higher layer signaling may include radio resource control (RRC) signaling.

In operation 1020, the base station transmits, to the UE, at least one piece of downlink control information (DCI) for scheduling the transmission of a second channel. Here, the second channel may be scheduled while being overlapped with at least one first resource region and a second resource region, which is a remaining resource excluding the first resource region.

In an embodiment, at least one first resource region and a second resource region may be allocated at least one transport block (TB) in a single slot. Here, a modulation and coding scheme (MCS) may be individually applied to each TB. In a single slot, the data channels transmitted through a resource region to which a control channel and/or a reference signal is allocated and a resource region to which a data channel is allocated may each experience different channel conditions. Accordingly, an MCS suitable for the channel condition may be applied to each TB allocated to the respective resource regions. According to an embodiment, communication can be performed more effectively by applying an MCS suitable for each channel condition in data channel transmission.

In an embodiment, at least one TB in a single slot may be allocated to a UE. That is, the base station may allocate, in a single slot, to one UE, all or a part of a resource region to which a control channel and/or a reference signal is allocated and a resource region to which a data channel is allocated. In this case, the base station may allocate, in a single slot, one TB to each of the resource region to which each control channel and/or a reference signal is allocated and the resource region to which each data channel is allocated (1UE Multi-TB).

In an embodiment, each TB in a single slot may be allocated to a different UE. That is, the base station may allocate, in a single slot, to multiple UEs, all or a part of the resource region to which the control channel and/or the reference signal is allocated and the resource region to which the data channel is allocated. The base station may allocate, in a single slot, one TB to each of the respective UEs (Multi-UE 1 TB).

In an embodiment, the base station may transmit one piece of DCI for scheduling the transmission of a second channel with respect to both at least one first resource region and a second resource region. That is, the base station may schedule the entire resource region through one piece of DCI. In this case, the DCI may include at least one piece of identification information or indication information for identifying each of the at least one first resource region and the second resource region. That is, in order to distinguish between the resource region to which a control channel and/or a reference signal is allocated and the resource region to which a data channel is allocated, the resource regions to be scheduled through one piece of DCI, the base station may include, in the DCI, at least one piece of identification information or indication information for identifying and/or indicating each of resource regions, and transmit the DCI to the UE.

In an embodiment, the base station may transmit multiple pieces of DCI for scheduling the transmission of a second channel with respect to each of at least one first resource regions and a second resource region. That is, the base station may schedule each of the resource regions by using different pieces of DCI. Here, the DCI may include identification information or indication information for identifying the at least one first resource region and the second resource region. That is, in order to distinguish between the resource region to which a control channel and/or a reference signal is allocated and the resource region to which a data channel is allocated, the base station may include, in the DCI, identification information or indication information for identifying and/or indicating each of resource regions, and transmit the DCI to the UE.

Furthermore, in an embodiment, in order to individually apply MCS to each TB allocated to each resource region, the DCI may include MCS information corresponding to the identification information or indication information. Here, the MCS information may include an MCS index. The MCS index may include an index corresponding to at least one of a modulation method, a modulation order, a code rate, a target code rate, code rate information, a spectral efficiency, a transport block size (TBS) index, TB size information (TBS information), and a redundancy version.

When the base station transmits one piece of DCI for scheduling the transmission of a second channel with respect to both at least one first resource region and a second resource region, the DCI may include at least one piece of identification information or indication information, and may include at least one piece of MCS information corresponding thereto. Furthermore, when the base station transmits multiple pieces of DCI for scheduling the transmission of the second channel with respect to each of the at least one first resource region and the second resource region, the DCI may include identification information or indication information and at least one piece of MCS information corresponding thereto.

In operation 1030, the base station may receive a second channel from the UE. Here, the base station may receive the second channel from the UE, based on the DCI transmitted in operation 1020.

Although not illustrated in FIG. 10, the base station may receive uplink control information (UCI) from the UE with respect to both the at least one first resource region and the second resource region. In addition, the base station may receive the UCI from the UE with respect to each of the at least one first resource region and the second resource region. In an embodiment, the UCI is transmitted via a PUCCH, and may include acknowledgement/negative acknowledgement or not acknowledged (ACK/NACK), a scheduling request (SR), channel state information (CSI), etc.

According to an embodiment of the disclosure, an overlapping resource allocation method enables the base station and the UE to perform communication by efficiently utilizing radio resources, as a control channel and/or a reference signal and a data channel are allocated to a radio resource region in an overlapping manner.

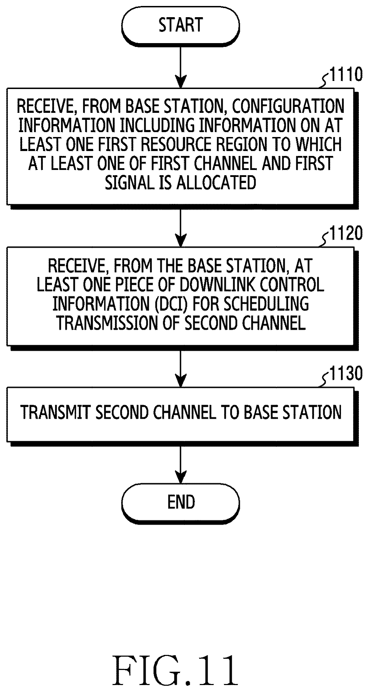

FIG. 11 is a flowchart illustrating a UE resource allocation method according to an embodiment of the disclosure.

In operation 1110, the UE receives, from the base station, configuration information including information on at least one first resource region to which at least one of a first channel and a first signal is allocated. Here, the first channel and the first signal may include a control channel and/or a reference signal. For example, the control channel and/or the reference signal may include a PUCCH, an SRS, a PRACH, etc.

In an embodiment, in the uplink, the UE may receive allocation of a control channel and/or a reference signal such as a PUCCH, an SRS, a PRACH, etc. from the base station through configuration information. Here, the UE may receive allocation of the PUCCH first, followed by the PRACH, and then the SRS from the base station. However, the method by which the UE receives allocation of the control channel and/or the reference signal from the base station is not limited thereto, and the UE may receive allocation of the control channel and/or the reference signal through various methods.

In an embodiment, the configuration information may be transmitted via higher layer signaling, where the higher layer signaling may include radio resource control (RRC) signaling.

In operation 1120, the UE receives, from the base station, at least one piece of downlink control information (DCI) for scheduling the transmission of a second channel. Here, the second channel may be scheduled while being overlapped with at least one first resource region and a second resource region, which is a remaining resource excluding the first resource region.

In an embodiment, at least one first resource region and a second resource region may be allocated at least one transport block (TB) in a single slot. Here, a modulation and coding scheme (MCS) may be individually applied to each TB. In a single slot, the data channels transmitted through a resource region to which a control channel and/or a reference signal is allocated and a resource region to which a data channel is allocated may each experience different channel conditions. Accordingly, an MCS suitable for the channel condition may be applied to each TB allocated to the respective resource regions. According to an embodiment, communication can be performed more effectively by applying an MCS suitable for each channel condition in data channel transmission.

In an embodiment, at least one TB in a single slot may be allocated to a UE. That is, the base station may allocate, in a single slot, to one UE, all or a part of a resource region to which a control channel and/or a reference signal is allocated and a resource region to which a data channel is allocated. In this case, the UE may receive, from the base station, an allocation of one TB in a single slot with respect to each of the resource region to which each control channel and/or a reference signal is allocated and the resource region to which each data channel is allocated (1UE Multi-TB).

In an embodiment, each TB in a single slot may be allocated to a different UE. That is, the base station may allocate, in a single slot, to multiple UEs, all or a part of the resource region to which the control channel and/or the reference signal is allocated and the resource region to which the data channel is allocated. Each UE may receive, from the base station, an allocation of one TB in a single slot (Multi-UE 1 TB).

In an embodiment, the UE may receive, from the base station, one piece of DCI for scheduling the transmission of a second channel with respect to both at least one first resource region and a second resource region. That is, the UE may receive scheduling of the entire resource region through one piece of DCI. In this case, the DCI may include at least one piece of identification information or indication information for identifying each of the at least one first resource region and the second resource region. That is, in order to distinguish between the resource region to which a control channel and/or a reference signal is allocated and the resource region to which a data channel is allocated, the resource regions to be scheduled through one piece of DCI, the base station may include, in the DCI, at least one piece of identification information or indication information for identifying and/or indicating each of resource regions, and transmit the DCI to the UE.

In an embodiment, the UE may receive, from the base station, multiple pieces of DCI for scheduling the transmission of a second channel with respect to each of at least one first resource regions and a second resource region. That is, the UE may receive scheduling of each of the resource regions using different pieces of DCI. Here, the DCI may include identification information or indication information for identifying the at least one first resource region and the second resource region. That is, in order to distinguish between the resource region to which a control channel and/or a reference signal is allocated and the resource region to which a data channel is allocated, the base station may include, in the DCI, identification information or indication information for identifying and/or indicating each of resource regions, and transmit the DCI to the UE.

Furthermore, in an embodiment, in order to individually apply MCS to each TB allocated to each resource region, the DCI may include MCS information corresponding to the identification information or indication information. Here, the MCS information may include an MCS index. The MCS index may include an index corresponding to at least one of a modulation method, a modulation order, a code rate, a target code rate, code rate information, a spectral efficiency, a transport block size (TBS) index, TB size information (TBS information), and a redundancy version.

When the UE receives, from the base station, one piece of DCI for scheduling the transmission of a second channel with respect to both at least one first resource region and a second resource region, the DCI may include at least one piece of identification information or indication information, and may include at least one piece of MCS information corresponding thereto. Furthermore, when UE receives, from the base station, multiple pieces of DCI for scheduling the transmission of the second channel with respect to each of the at least one first resource region and the second resource region, the DCI may include identification information or indication information and at least one piece of MCS information corresponding thereto.

In operation 1130, the UE transmits the second channel to the base station. Here, the UE may receive the second channel from the base station, based on the DCI received in operation 1120.

Although not illustrated in FIG. 11, the UE may transmit, to the base station, uplink control information (UCI) with respect to both the at least one first resource region and the second resource region. In addition, the UE may transmit the UCI to the base station with respect to at least one of the first resource region and each of the second resource regions. In an embodiment, the UCI is transmitted via a PUCCH, and may include acknowledgement/negative acknowledgement or not acknowledged (ACK/NACK), a scheduling request (SR), channel state information (CSI), etc.

According to an embodiment of the disclosure, an overlapping resource allocation method enables the base station and the UE to perform communication by efficiently utilizing radio resources, as a control channel and/or a reference signal and a data channel are allocated to a radio resource region in an overlapping manner.

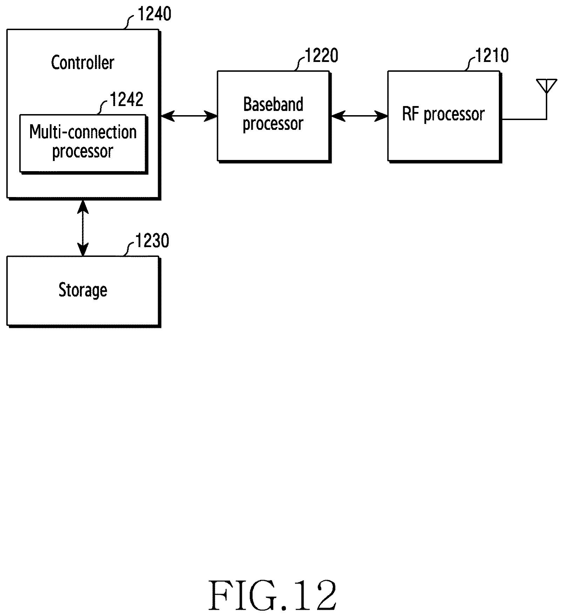

FIG. 12 is a block diagram illustrating an internal structure of a UE according to an embodiment of the disclosure.

Referring to FIG. 12, the UE may include a radio frequency (RF) processor 1210, a baseband processor 1220, a storage 1230, and a controller 1240.

The RF processor 1210 may perform a function for transmitting and receiving a signal via a wireless channel, such as band conversion and amplification of the signal. That is, the RF processor 1210 may up-convert a baseband signal provided from the baseband processor 1220 to an RF band signal, may transmit the same through an antenna, and may down-convert an RF band signal received through the antenna to a baseband signal. For example, the RF processor 1210 may include a transmission filter, a reception filter, an amplifier, a mixer, an oscillator, a digital-to-analog converter (DAC), an analog-to-digital converter (ADC), and the like. Although only one antenna is illustrated in FIG. 12, the UE may include multiple antennas. In addition, the RF processor 1210 may include multiple RF chains. Furthermore, the RF processor 1210 may perform beamforming. For the beamforming, the RF processor 1210 may adjust the phase and magnitude of each of signals transmitted and received through multiple antennas or antenna elements. In addition, the RF processing unit 1210 may perform multi-input multi-output (MIMO), and may receive multiple layers when performing a MIMO operation.

The baseband processor 1220 may perform functions of conversion between baseband signals and bitstrings according to the system's physical layer specifications. For example, during data transmission, the baseband processing unit 1220 may encode and modulate a transmitted bitstring to generate complex symbols. In addition, during data reception, the baseband processor 1220 may demodulate and decode a baseband signal provided from the RF processor 1210 to restore a received bitstring. For example, when following the orthogonal frequency division multiplexing (OFDM) scheme, during data transmission, the baseband processor 1220 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 1220 may split a baseband signal provided from the RF processor 1210 at the OFDM symbol level, may restore signals mapped to subcarriers through a fast Fourier transform (FFT) operation, and may restore a received bitstring through demodulation and decoding.

The baseband processor 1220 and the RF processor 1210 may transmit and receive signals as described above. Therefore, the baseband processor 1220 and the RF processor 1210 may be referred to as a transmitter, a receiver, a transceiver, or a communication unit. Furthermore, at least one of the baseband processor 1220 and the RF processor 1210 may include multiple communication modules to support multiple different radio access technologies. In addition, at least one of the baseband processor 1220 and the RF processor 1210 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands. The UE may transmit/receive signals to/from the base station by using the baseband processor 1220 and the RF processor1210. The signals may include control information and data.

The storage 1230 stores basic programs, application programs, and data, such as configuration information, for operation of the main base station. Particularly, the storage 1230 may store information regarding a second access node configured to perform wireless communication by using a second radio access technology. In addition, the storage 1230 provides the stored data at the request of the controller 1240.

The controller 1240 controls the overall operation of the UE. For example, the controller 1240 may transmit/receive signals through the baseband processor 1220 and the RF processor 1210. In addition, the controller1240 records data in the storage 1230 and reads the data from the storage 1230. To this end, the controller 1240 may include at least one processor. For example, the controller 1240 may include a communication processor (CP) configured to perform control for communication, and an application processor (AP) configured to control upper layers such as application programs. In an embodiment, the controller 1240 may include a multi-connection processor 1242 for processing multiple connections.

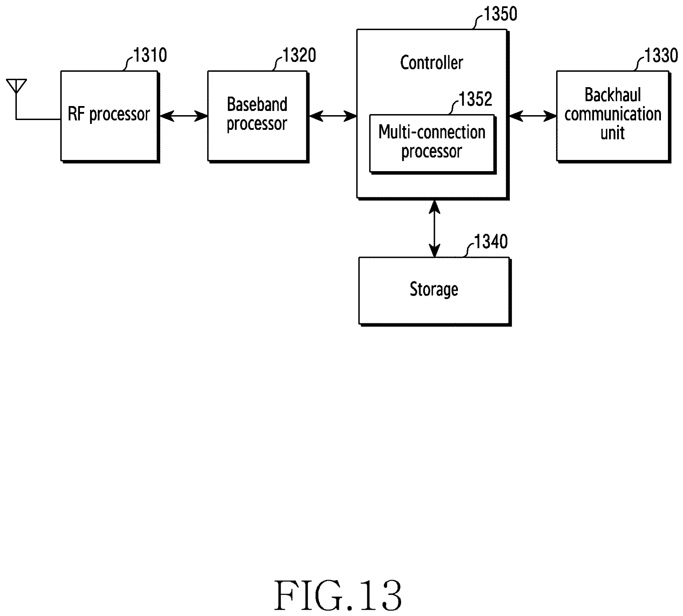

FIG. 13 is a block diagram illustrating a structure of a base station according to an embodiment of the disclosure.

Referring to FIG. 13, the base station may include an RF processor 1310, a baseband processor 1320, a backhaul communication unit 1330, a storage 1340, and a controller 1350.

The RF processor 1310 may perform a function for transmitting and receiving a signal via a wireless channel, such as band conversion and amplification of the signal. That is, the RF processor 1310 may up-convert a baseband signal provided from the baseband processor 1320 to an RF band signal, may transmit the same through an antenna, and may down-convert an RF band signal received through the antenna to a baseband signal. For example, the RF processor 1310 may include a transmission filter, a reception filter, an amplifier, a mixer, an oscillator, a DAC, and an ADC. Although only one antenna is illustrated in FIG. 13, the base station may include multiple antennas. In addition, the RF processor 1310 may include multiple RF chains. Furthermore, the RF processor 1310 may perform beamforming. For the beamforming, the RF processor 1310 may adjust the phase and magnitude of each of signals transmitted and received through multiple antennas or antenna elements. The RF processor 1310 may transmit one or more layers to perform a downward MIMO operation.

The baseband processor 1320 may perform functions of conversion between baseband signals and bitstrings according to the physical layer specifications of first radio access technology. For example, during data transmission, the baseband processor 1320 may encode and modulate a transmitted bitstring to generate complex symbols. In addition, during data reception, the baseband processor 1320 may demodulate and decode a baseband signal provided from the RF processor 1310 to restore a received bitstring. For example, when following the OFDM scheme, during data transmission, the baseband processor 1320 may encode and modulate a transmitted bitstring to generate complex symbols, may map the complex symbols to subcarriers, and may configure OFDM symbols through an IFFT operation and CP insertion. In addition, during data reception, the baseband processor 1320 may divide the baseband signal provided from the RF processor 1310 into units of OFDM symbols, restore signals mapped to subcarriers via the FFT operation, and then restore a received bit stream via demodulation and decoding. The baseband processor 1320 and the RF processor 1310 may transmit and receive signals as described above. Therefore, the baseband processor 1320 and the RF processor 1310 may be referred to as a transmitter, a receiver, a transceiver, a communication unit, or a wireless communication unit. The base station may transmit/receive signals to/from UEs by using the baseband processor 1320 and the RF processor 1310. The signals may include control information and data.

The backhaul communication unit 1330 provides an interface for performing communication with other nodes in the network. That is, the backhaul communication unit 1330 may convert bitstrings transmitted from the main base station to other nodes (for example, auxiliary base station, core network) to physical signals, and may convert physical signals received from the other nodes to bitstrings.

The storage 1340 may store basic programs, application programs, and data, such as configuration information, for operation of the main base station. Particularly, the storage 1340 may store information regarding a bearer allocated to a connected UE, a measurement result reported from the connected UE, and the like. In addition, the storage 1340 may store information serving as a criterion to determine whether to provide multi-connection to a UE or to suspend the same. In addition, the storage 1340 provides the stored data at the request of the controller 1350.

The controller 1350 controls the overall operation of the base station. For example, the controller 1350 may transmit/receive signals through the baseband processor 1320 and the RF processor 1310 or through the backhaul communication unit 1330. In addition, the controller 1350 records data in the storage 1340 and reads the data from the storage 1340. To this end, the controller 1350 may include at least one processor. In an embodiment, the controller 1350 may include a multi-connection processor 1352 for processing multiple connections.

In an embodiment, a method performed by a base station in a wireless communication system may include transmitting, to a terminal, configuration information including information on at least one first resource region to which at least one of a first channel and a first signal is allocated, transmitting, to the terminal, at least one piece of downlink control information (DCI) for scheduling transmission of a second channel, and receiving the second channel from the terminal, wherein the second channel is scheduled while being overlapped with the at least one first resource region and a second resource region, which is a remaining resource excluding the first resource region.

In an embodiment, at least one transport block (TB) may be allocated, in a single slot, to the at least one first resource region and the second resource region, and a modulation and coding scheme (MCS) may be individually applied to the at least one TB.

In an embodiment, the at least one TB may be allocated, in the single slot, to the terminal.

In an embodiment, the at least one TB may be allocated, in the single slot, to different terminals.

In an embodiment, the transmitting of the at least one piece of downlink control information to the terminal may include transmitting the at least one piece of downlink control information for scheduling transmission of the second channel with respect to both the at least one first resource region and the second resource region.

In an embodiment, the transmitting of the at least one piece of downlink control information to the terminal may include transmitting the at least one piece of downlink control information for scheduling transmission of the second channel with respect to each of the at least one first resource region and the second resource region.

In an embodiment, the method may further include receiving uplink control information (UCI) from the terminal with respect to both the at least one first resource region and the second resource region.

In an embodiment, the method may further include receiving uplink control information (UCI) from the terminal with respect to each of the at least one first resource region and the second resource region.

In an embodiment, a method performed by a terminal in a wireless communication system may include receiving, from a base station, configuration information including information on at least one first resource region to which at least one of a first channel and a first signal is allocated, receiving, from the base station, at least one piece of downlink control information (DCI) for scheduling transmission of a second channel, and transmitting the second channel to the base station, wherein the second channel is scheduled while being overlapped with the at least one first resource region and a second resource region, which is a remaining resource excluding the first resource region.

In an embodiment, at least one transport block (TB) may be allocated, in a single slot, to the at least one first resource region and the second resource region, and a modulation and coding scheme (MCS) may be individually applied to the at least one TB.

In an embodiment, a base station in a wireless communication system may include a transceiver, and at least one processor, wherein the at least one processor is configured to transmit, to a terminal, configuration information including information on at least one first resource region to which at least one of a first channel and a first signal is allocated, transmit, to the terminal, at least one piece of downlink control information (DCI) for scheduling transmission of a second channel, and receive the second channel from the terminal, wherein the second channel is scheduled while being overlapped with the at least one first resource region and a second resource region, which is a remaining resource excluding the first resource region.

In an embodiment, at least one transport block (TB) may be allocated, in a single slot, to the at least one first resource region and the second resource region, and a modulation and coding scheme (MCS) may be individually applied to the at least one TB.

In an embodiment, the at least one TB may be allocated, in the single slot, to the terminal.

In an embodiment, the at least one TB may be allocated, in the single slot, to different terminals.

In an embodiment, the at least one processor may be configured to transmit the at least one piece of downlink control information for scheduling transmission of the second channel with respect to both the at least one first resource region and the second resource region.

In an embodiment, the at least one processor may be configured to transmit the at least one piece of downlink control information for scheduling transmission of the second channel with respect to each of the at least one first resource region and the second resource region.

In an embodiment, the at least one processor may be configured to receive uplink control information (UCI) from the terminal with respect to both the at least one first resource region and the second resource region.

In an embodiment, the at least one processor may be configured to receive uplink control information (UCI) from the terminal with respect to each of the at least one first resource region and the second resource region.

In an embodiment, a terminal in a wireless communication system may include a transceiver, and at least one processor, wherein the at least one processor is configured to receive, from a base station, configuration information including information on at least one first resource region to which at least one of a first channel and a first signal is allocated, receive, from the base station, at least one piece of downlink control information (DCI) for scheduling transmission of a second channel, and transmit the second channel to the base station, wherein the second channel is scheduled while being overlapped with the at least one first resource region and a second resource region, which is a remaining resource excluding the first resource region.

In an embodiment, at least one transport block (TB) may be allocated, in a single slot, to the at least one first resource region and the second resource region, and a modulation and coding scheme (MCS) may be individually applied to the at least one TB.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary.

**Claims**

1. A method performed by a base station in a wireless communication system, the method comprising:

    transmitting, to a terminal, configuration information including information on at least one first resource region to which at least one of a first channel and a first signal is allocated;
    transmitting, to the terminal, at least one piece of downlink control information (DCI) for scheduling transmission of a second channel; and
    receiving the second channel from the terminal,
    wherein the second channel is scheduled to overlap with the at least one first resource region and a second resource region corresponding to resources other than the first resource region.

2. The method of claim 1, wherein, in one slot, at least one transport block (TB) is allocated to the at least one first resource region and the second resource region, and
    wherein a modulation and coding scheme (MCS) is individually applied to the at least one TB.

3. The method of claim 2, wherein, in the one slot, the at least one TB is allocated to the terminal or to different terminals.

4. The method of claim 1, wherein the transmitting of the at least one piece of DCI to the terminal comprises transmitting the at least one piece of DCI for scheduling transmission of the second channel in both or each of the at least one first resource region and the second resource region.

5. The method of claim 1, further comprising receiving uplink control information (UCI) from the terminal in both or each of the at least one first resource region and the second resource region.

6. A method performed by a terminal in a wireless communication system, the method comprising:

   receiving, from a base station, configuration information including information on at least one first resource region to which at least one of a first channel and a first signal is allocated;
   receiving, from the base station, at least one piece of downlink control information (DCI) for scheduling transmission of a second channel; and
   transmitting the second channel to the base station,
   wherein the second channel is scheduled to overlap with the at least one first resource region and a second resource region corresponding to resources other than the first resource region.

7. The method of claim 6, wherein, in one slot, at least one transport block (TB) is allocated to the at least one first resource region and the second resource region, and
   wherein a modulation and coding scheme (MCS) is individually applied to the at least one TB.

8. A base station in a wireless communication system, the base station comprising:

   a transceiver; and
   at least one processor,
   wherein the at least one processor is configured to:

   transmit, to a terminal, configuration information including information on at least one first resource region to which at least one of a first channel and a first signal is allocated; transmit, to the terminal, at least one piece of downlink control information (DCI) for scheduling transmission of a second channel; and
   receive the second channel from the terminal,
   wherein the second channel is scheduled to overlap with the at least one first resource region and a second resource region corresponding to resources other than the first resource region.

9. The base station of claim 8, wherein, in one slot, at least one transport block (TB) is allocated to the at least one first resource region and the second resource region, and
   wherein a modulation and coding scheme (MCS) is individually applied to the at least one TB.

10. The base station of claim 9, wherein, in the one slot, the at least one TB is allocated to the terminal or to different terminals.

11. The base station of claim 8, wherein the at least one processor is configured to transmit the at least one piece of DCI for scheduling transmission of the second channel in both or each of the at least one first resource region and the second resource region.

12. The base station of claim 8, wherein the at least one processor is configured to receive uplink control information (UCI) from the terminal in both or each of the at least one first resource region and the second resource region.

13. A terminal in a wireless communication system, the terminal comprising:

   a transceiver; and
   at least one processor,
   wherein the at least one processor is configured to:

   receive, from a base station, configuration information including information on at least one first resource region to which at least one of a first channel and a first signal is allocated;

receive, from the base station, at least one piece of downlink control information (DCI) for scheduling transmission of a second channel; and
transmit the second channel to the base station,
wherein the second channel is scheduled to overlap with the at least one first resource region and a second resource region corresponding to resources other than the first resource region.

14. The terminal of claim 13, wherein, in one slot, at least one transport block (TB) is allocated to the at least one first resource region and the second resource region, and
wherein a modulation and coding scheme (MCS) is individually applied to the at least one TB.

FIG.1

FIG.2

Length of control region
(304)

Frequency
resource
(303)

UE
bandwidth
part
(310)

Frequency

Time

Slot (320)

Control region #1 (301)

Control region #2 (302)

FIG.3

1 symbol (401)

1 PRB (402)

DMRS (405)

REG (403)

CCE (404)

FIG.4

FIG.5

Slot n

Time

PUCCH

PUSCH

S
R
S

PRACH

PUCCH

Frequency

FIG.6

Slot n

Time

PUCCH

PUSCH
UE1
1 Transport Block

S
R
S

PRACH

PUCCH

Frequency

FIG.7

Slot n

Time

PUCCH

PUSCH
UE 2
1 Transport Block

PUSCH
UE 1
1 Trnasport Block

PRACH

PUSCH
UE 3
1 Transport Block

PUCCH

PUSCH
UE 4
1 Transport Block

Frequency

FIG.8

Slot n

Time

PUCCH  PUSCH
UE1
Transport Block 1

PUSCH
UE1
Transport Block 2

PRACH  PUSCH
UE1
Transport Block 3

PUCCH  PUSCH
UE1
Transport Block 4

Frequency

FIG.9

START

$\zeta$1010

TRANSMIT, TO UE, CONFIGURATION INFORMATION INCLUDING INFORMATION ON AT LEAST ONE FIRST RESOURCE REGION TO WHICH AT LEAST ONE OF FIRST CHANNEL AND FIRST SIGNAL IS ALLOCATED

$\zeta$1020

TRANSMIT, TO UE, AT LEAST ONE PIECE OF DOWNLINK CONTROL INFORMATION (DCI) FOR SCHEDULING TRANSMISSION OF SECOND CHANNEL

$\zeta$1030

RECEIVE SECOND CHANNEL FROM UE

END

FIG.10

START

**1110**

RECEIVE, FROM BASE STATION, CONFIGURATION INFORMATION INCLUDING INFORMATION ON AT LEAST ONE FIRST RESOURCE REGION TO WHICH AT LEAST ONE OF FIRST CHANNEL AND FIRST SIGNAL IS ALLOCATED

**1120**

RECEIVE, FROM THE BASE STATION, AT LEAST ONE PIECE OF DOWNLINK CONTROL INFORMATION (DCI) FOR SCHEDULING TRANSMISSION OF SECOND CHANNEL

**1130**

TRANSMIT SECOND CHANNEL TO BASE STATION

END

# FIG.11

1240

Controller

1242

Multi-connection processor

1220

Baseband processor

1210

RF processor

1230

Storage

FIG.12

FIG.13

# EP 4 651 592 A1

## INTERNATIONAL SEARCH REPORT

| International application No. |
|---|
| **PCT/KR2023/016527** |

### A. CLASSIFICATION OF SUBJECT MATTER

**H04W 72/04**(2009.01)i; **H04W 72/232**(2023.01)i; **H04W 72/21**(2023.01)i; **H04L 5/00**(2006.01)i

According to International Patent Classification (IPC) or to both national classification and IPC

### B. FIELDS SEARCHED

Minimum documentation searched (classification system followed by classification symbols)

H04W 72/04(2009.01); H04B 7/0404(2017.01); H04B 7/06(2006.01); H04L 1/16(2006.01); H04L 27/26(2006.01); H04L 5/00(2006.01); H04W 72/12(2009.01); H04W 72/232(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: base station, terminal, configuration, signal, resource, allocation, DCI(downlink control information), channel, overlap, TB(transport block), UCI(uplink control information), MCS(modulation and coding scheme)

### C. DOCUMENTS CONSIDERED TO BE RELEVANT

| Category* | Citation of document, with indication, where appropriate, of the relevant passages | Relevant to claim No. |
|---|---|---|
| X | KR 10-2023-0005418 A (WILUS INSTITUTE OF STANDARDS AND TECHNOLOGY INC.) 09 January 2023 (2023-01-09)<br>See paragraphs [0057]-[0081]; claim 5; and figure 3. | 1-14 |
| A | WO 2022-215968 A1 (LG ELECTRONICS INC.) 13 October 2022 (2022-10-13)<br>See paragraphs [0071]-[0376]; and figures 1-14. | 1-14 |
| A | KR 10-2020-0131762 A (SAMSUNG ELECTRONICS CO., LTD.) 24 November 2020 (2020-11-24)<br>See paragraphs [0028]-[0276]; and figures 1-17. | 1-14 |
| A | US 2021-0243779 A1 (QUALCOMM INCORPORATED) 05 August 2021 (2021-08-05)<br>See paragraphs [0038]-[0230]; and figures 1-17. | 1-14 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/016527** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-120393 A (GUANGDONG OPPO MOBILE TELECOMMUNICATIONS CORP., LTD.) 06 August 2020 (2020-08-06)<br>See paragraphs [0032]-[0112]; and figures 1-14. | 1-14 |

Form PCT/ISA/210 (second sheet) (July 2022)

EP 4 651 592 A1

## INTERNATIONAL SEARCH REPORT
### Information on patent family members

International application No.

**PCT/KR2023/016527**

| Patent document cited in search report | | | Publication date (day/month/year) | Patent family member(s) | | | Publication date (day/month/year) |
|---|---|---|---|---|---|---|---|
| KR | 10-2023-0005418 | A | 09 January 2023 | CN | 111183608 | A | 19 May 2020 |
| | | | | CN | 111183608 | B | 15 November 2022 |
| | | | | CN | 115720135 | A | 28 February 2023 |
| | | | | CN | 115765946 | A | 07 March 2023 |
| | | | | CN | 115765947 | A | 07 March 2023 |
| | | | | EP | 3681079 | A1 | 15 July 2020 |
| | | | | EP | 3681079 | B1 | 07 December 2022 |
| | | | | EP | 4164166 | A1 | 12 April 2023 |
| | | | | ES | 2937950 | T3 | 03 April 2023 |
| | | | | FI | 3681079 | T3 | 22 March 2023 |
| | | | | JP | 2020-533861 | A | 19 November 2020 |
| | | | | JP | 2022-172323 | A | 15 November 2022 |
| | | | | JP | 2022-172324 | A | 15 November 2022 |
| | | | | JP | 7142960 | B2 | 28 September 2022 |
| | | | | KR | 10-2019-0028148 | A | 18 March 2019 |
| | | | | KR | 10-2020-0040837 | A | 20 April 2020 |
| | | | | KR | 10-2023-0124769 | A | 25 August 2023 |
| | | | | KR | 10-2481201 | B1 | 27 December 2022 |
| | | | | PL | 3681079 | T3 | 27 March 2023 |
| | | | | US | 11304181 | B2 | 12 April 2022 |
| | | | | US | 11832255 | B2 | 28 November 2023 |
| | | | | US | 2020-0213989 | A1 | 02 July 2020 |
| | | | | US | 2022-0191854 | A1 | 16 June 2022 |
| | | | | US | 2022-0264549 | A1 | 18 August 2022 |
| | | | | WO | 2019-050371 | A1 | 14 March 2019 |
| WO | 2022-215968 | A1 | 13 October 2022 | KR | 10-2023-0035128 | A | 10 March 2023 |
| | | | | US | 11785617 | B2 | 10 October 2023 |
| | | | | US | 2023-0217461 | A1 | 06 July 2023 |
| KR | 10-2020-0131762 | A | 24 November 2020 | EP | 3958637 | A1 | 23 February 2022 |
| | | | | JP | 2022-532408 | A | 14 July 2022 |
| | | | | US | 2022-0248411 | A1 | 04 August 2022 |
| | | | | WO | 2020-231182 | A1 | 19 November 2020 |
| US | 2021-0243779 | A1 | 05 August 2021 | BR | 112022014698 | A2 | 20 September 2022 |
| | | | | CN | 115053612 | A | 13 September 2022 |
| | | | | EP | 4101240 | A1 | 14 December 2022 |
| | | | | KR | 10-2022-0138378 | A | 12 October 2022 |
| | | | | TW | 202135581 | A | 16 September 2021 |
| | | | | US | 11743890 | B2 | 29 August 2023 |
| | | | | WO | 2021-158628 | A1 | 12 August 2021 |
| JP | 2020-120393 | A | 06 August 2020 | None | | | |

Form PCT/ISA/210 (patent family annex) (July 2022)